(19) Europäisches Patentamt
European Patent Office
Office européen des brevets

(11) EP 3 736 937 A1

(12) EUROPEAN PATENT APPLICATION

(43) Date of publication:
11.11.2020 Bulletin 2020/46

(51) Int Cl.:
H02J 3/38 (2006.01)        H02J 3/46 (2006.01)

(21) Application number: 19173833.5

(22) Date of filing: 10.05.2019

(84) Designated Contracting States:
AL AT BE BG CH CY CZ DE DK EE ES FI FR GB
GR HR HU IE IS IT LI LT LU LV MC MK MT NL NO
PL PT RO RS SE SI SK SM TR
Designated Extension States:
BA ME
Designated Validation States:
KH MA MD TN

(71) Applicant: MARICI Holdings The Netherlands B.V.
3068AX Rotterdam (NL)

(72) Inventors:
• BOTARELLI, Andrea
52010 S. Mama (AR) (IT)

• LAMOGLIE, Luigi
52028 Terranuova Bracciolini (AR) (IT)
• BUCCI, Tiberio
52028 Terranuova Bracciolini (AR) (IT)
• FAGGIANI, Alessandro
52028 Terranuova Bracciolini (AR) (IT)
• FALASCHI, Cosimo
52028 Terranuova Bracciolini (AR) (IT)

(74) Representative: Mannucci, Michele et al
Ufficio Tecnico
Ing. A. Mannucci S.r.l.
Via della Scala, 4
50123 Firenze (IT)

(54) METHOD AND SYSTEM FOR CONTROLLING POWER EXPORTATION

(57) A method for regulating power export from an energy generation system (1) to a utility grid (11) is disclosed. The energy generation system includes a plurality of power generators (2.1, ... 2.i, ...., 2.n). The method comprises a step of monitoring an actual power ($P_{meter}$) exported from the system (1) to the utility grid (11). The method further includes a step of providing to each power generator (2.1, ... 2.i, ...., 2.n) a feedback signal ($P_{meter}$), containing information on the power exported by the system (1) to the utility grid (11). At each power generator (2.1, ... 2.i, ...., 2.n) a respective regulator (5.1, .... 5.i, ...., 5.n), provides a regulation signal ($P_{limit(i)}(t)$) for the relevant power generator. The regulator can be embedded in the inverter of the respective power generator.

Fig.2

EP 3 736 937 A1

**Description**

TECHNICAL FIELD

The present disclosure relates in general to energy generation within a utility grid. Embodiments disclosed herein specifically relate to generation of electric energy from renewable energy sources. In particular, the present disclosure relates to methods and systems for regulating, i.e. controlling power exportation from a system of electric generators to a utility grid. Embodiments disclosed herein specifically refer to renewable energy source systems using low inertia generators, such a photovoltaic generators or wind turbines. As used herein, a low-inertia generator is a generator which can reduce the output power in a time interval that is negligible compared to the control dynamic.

BACKGROUND ART

The continuous increase in power demand poses serious pollution issues and raises concern on the environmental impact of power generation processes. This is particularly true when fossil fuels are used to generate thermal power, which is then converted into mechanical and electric power. Combustion of fossil fuels (either in solid, liquid or gaseous form) generates greenhouse gas (carbon dioxide), which is considered responsible for climate changes.

In an attempt to reduce the environmental impact of power generation, the use of renewable energy sources has been investigated, in particular solar and wind energy.

So-called DER (Distributed Energy Resources) have been developed, which include systems typically using renewable energy sources, including small hydro, biomass, biogas, solar, wind, and geothermal power sources. DER play an increasingly important role for the electric power distribution system. Often DER systems are grid-connected, i.e. they are connected to a large utility grid. Electric power generated by the power generators of renewable energy source systems is supplied to local loads connected to the system. Excess power available from the renewable energy source is delivered to the utility grid.

Plants with photovoltaic generators, as well as other renewable energy source systems shall satisfy several requirements regarding power control. Main applications include on-demand regulation of the power flow between the renewable energy source system and the utility grid, as well as grid stability control, e.g. active power derating or reactive power injection for compensating abnormal voltage/frequency conditions.

Multiple generators as well as other grid-connected devices like loads, transformers, storage batteries, are part of typical commercial and industrial plants. Typical control flow requires monitoring power signals at the point of common coupling (hereon shortly also "PCC") between the renewable energy source system and the utility grid. Based upon said power signals, specific actions are executed on the power generators of the renewable energy source system. This is usually implemented with closed-loop control using PCC signals as feedback for updating generator settings.

Moreover, current country standards are demanding for higher plant control performances like reaching control targets within a precise deadline to avoid power overflow on utility-side and/or grid faults.

One of the most wide-spread plant control applications is export limitation, which aims at keeping the actual active power flow from the renewable energy resource system to the utility grid through the PCC under a predefined limit.

Methods and systems for controlling photovoltaic energy production within energy export constrains are disclosed for instance in US Pat. N. 10,139,847.

Photovoltaic plants can include a large number of photovoltaic panels electrically coupled to inverters, which convert the DC electric power generated by the photovoltaic panels into suitable AC current with required frequency and phase. Photovoltaic systems can be connected to local loads and to the utility grid, to which power exceeding the one required to operate the loads is exported. Depending upon country standards applying in the specific country in which the system is installed, export limitations may apply, which prevent unlimited exportation of power in the utility grid.

Exportation control and limitation are currently based on external devices, i.e. devices which are added to and combined with the photovoltaic inverters, providing centralized closed-loop control of the power generators of the system.

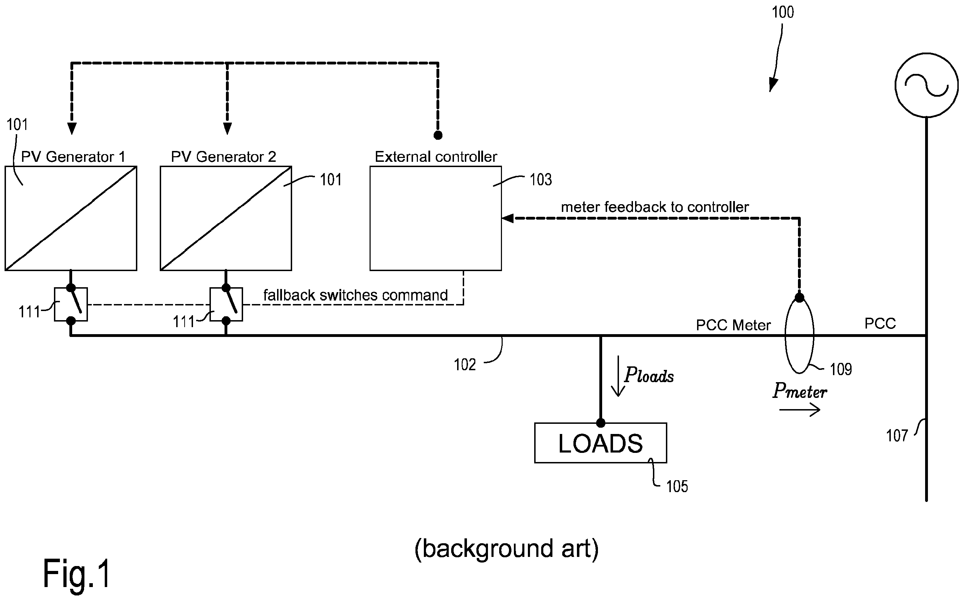

A system according to the current art is illustrated schematically in Fig.1. The renewable energy source system 100 comprises a plurality of photovoltaic generators, only two of which are shown at 101. The generators 101 are electrically coupled to a local grid 102 and provide power to local loads 105. The generators 101 are further electrically coupled to a utility grid 107 at a so-called point of common coupling PCC. Electric power which exceeds the power absorbed by the local loads 105 can be delivered to the utility grid 107. A power meter 109 detects the amount of power ($P_{meter}$) exported in the utility grid 107 through the point of common coupling. A meter feedback signal is provided by the PCC meter 109 to a controller 103. The task of the controller 103 is to generate a feedback control output signal for the photovoltaic generators 101. The aim of the control signal generated by the controller 103 is to modulate the electric power generated by the photovoltaic generators 101, such that the power exported to the utility grid 107 does not exceed an exportation limit. If the power absorbed by the loads 105 decreases, for instance, the power exported to the utility grid 107 tends to increase. This increase of exported power is detected by the PCC meter 109 and a feedback signal is sent to the controller 103. In turn, the controller generates a regulation signal for the power generators 101 aimed at reducing the generated power, such that the exported power does not exceed a target exportation limit. Conversely, if the loads 105 require more power, the controller 103 receives a signal from the PCC meter 109, indicating that the exported power is dropped and that the amount of power generated by the power generators 101 can be increased without exceeding the export limitation.

The plant control infrastructure involves also connectivity between devices, such as for instance from the power meter 109 to the controller 103 and from the controller 103 to the generators 101. The connectivity can be implemented with several physical channels and protocols.

Beyond performance, reliability is another critical aspect of plant control. Since failure of control action can lead to significant issues (e.g. disconnection from utility grid and/or severe grid faults), the controller 103 must implement appropriate fallback strategies. Typical failure events covered by fallback strategies are for instance loss of communication between PCC power meter 109 and controller 103 or between controller 103 and power generators 101.

A very significant aspect for reliability is that, in case power generators cannot play an active role, the external controller 103 may require additional fallback devices for covering specific faults. This is schematically represented in Fig.1 by fallback switches 111, which are opened by controller 103 in case of need. An exemplary situation where the external controller 103 is required to resort to a fallback device operation is failure of communication between one or more power generators 101 and the controller 103. In such case, the controller 103 shall resort to fallback operation by opening external switches 111 to disconnect the defective generator(s) 101 from the grid.

The need of an external controller 103 and of fallback switches 111 and relevant connections adds to the overall cost of the renewable energy source system 100 and negatively affects the reliability thereof. It shall be noted that for instance photovoltaic plants may include hundreds of photovoltaic generators, each including an inverter which requires its own fallback switch 111 and its connection to the external controller 103.

It would therefore be beneficial to develop new methods and systems which overcome or alleviate one or more of the above mentioned limitations and drawbacks of the current art systems and methods

SUMMARY

According to one aspect, disclosed herein is a method for regulating power export from an energy generation system to a utility grid. The energy generation system includes a plurality of power generators for example renewable energy generators, adapted to convert a renewable energy into electric energy. Renewable energy generators can include, but are not limited to, photovoltaic generators and wind generators (wind turbines). The method comprises the step of monitoring an actual power exported from the system to the utility grid. The method further incudes the step of providing to each power generator a feedback signal, containing information on the power exported by the system to the utility grid. At each power generator, by means of a respective regulator, a regulation signal for the relevant power generator is calculated. The regulation signal can be a limitation signal, adapted to limit the power generated by each generator and thus the total power exported to the utility grid.

Each power generator is provided with its own regulator. The regulator can be an embedded regulator, i.e. it can be part of the inverter of the power generator. As used herein, the term inverter includes any electronic device adapted to convert the electric energy generated by the generator in a form suitable for exportation on a utility grid, and can therefore be or include a converter, such as a DC/AC.

In some embodiments the regulator is adapted to perform a feed-forward action. In other embodiments, the regulator can be a PI (Proportional-integrative) or a PID (Proportional-Integral-Derivative) regulator.

According to some embodiments, the method comprises a step of providing to each power generator information on the total power cumulatively generated by all power generators. Each regulator can for instance receive information on power generated by each power generator of the system and aggregate the received data to obtain the total information relating to the overall system. Each regulator can then provide a feed-forward control signal for the respective power generator based upon the total power generated by all power generators and upon a target power exportation value, in particular an exportation limit value, for instance..

The step of providing information on the total power cumulatively generated by all power generators can comprise the following steps. A first step includes publishing runtime measures of each power generator on a connectivity network, to which each power generator is connected. A second step may include collecting, at each power generator runtime measures published by all power generators and calculating aggregated data related to the overall system.

According to some embodiments, the regulation signal can be obtained as follows. The total power generated by the power generators is calculated, e.g. by aggregating published runtime data. Furthermore, the power absorbed by loads electrically coupled to the power generators is computed. A new value of the regulation signal is calculated as a function of: a previous value of the regulation signal, the target power exportation value, the power absorbed by the loads and the total power generated by the power generators. These steps are iteratively repeated whereby each new value of the regulation signal becomes the previous value of the regulation signal at the next iteration.

The power absorbed the loads can be computed, for instance, as the difference between the total power generated by the power generators and the power exported from the system to the utility grid.

Further embodiments and features of the method according to the present disclosure are set forth in the appended claims, which form an integral part of the description, and are further explained in the detailed description which follows.

The present disclosure further relates to an energy generating system, including a plurality of power generators electrically coupled at a point of common coupling to a utility grid for power exportation to the utility grid. Each power generator comprises a regulator, preferably embedded in a respective inverter, e.g. forming an integral part of the inverter. The system further includes at least one power meter adapted to measure power exported by the plurality of power generators to the utility grid. Each power generator further includes a device to measure the power generated by the power generator. The power generators and the at least one meter are connected to one another by a connectivity network, such that data can be exchanged between power generators and data can be further received from the power meter. The system can further include a local electric distribution grid, to which one or more loads can be electrically connected. Power can be supplied to the loads by the power generators. In some conditions, at least part of the power absorbed by the loads can be supplied by the utility grid, e.g. if the power generated by the power generator is insufficient. If a surplus power is generated by the power generators, exceeding the power required by the loads, said surplus power can be exported to the utility grid, provided the export limit is not exceeded, if such limit is provided, e.g. by local regulation.

The regulators of the power generators can be adapted to perform a method as defined above, to control power exportation to the utility grid.

In particularly advantageous embodiments the power generators are renewable energy source power generators, converting energy from a renewable energy source into electric energy.

In some embodiments, the power generators include photovoltaic power generators. In other embodiments, the power generators include wind generators, e.g. wind turbines.

Advantageously, the power generators have low or no inertia. A low-inertia or no-inertia power generator as understood herein is a power generator the output whereof can be changed, e.g. in response to a regulation signal, with a time delay which is negligible with respect to the control dynamic, i.e. the dynamic of the regulator.

Alternatively, the power generator may include fuel cells, or a genset (e.g. including a Diesel engine), or a hydro energy source.

In some embodiments the power generators may include or be combined with an accumulator, where electric energy can be stored, in any form of storable energy.

BRIEF DESCRIPTION OF THE DRAWINGS

A more complete appreciation of the disclosed embodiments of the invention and many of the attendant advantages thereof will be readily obtained as the same becomes better understood by reference to the following detailed description when considered in connection with the accompanying drawings, wherein:

Fig.1 illustrates a schematic of a system according to the current art described above;
Fig.2 illustrates an exemplary embodiment of a renewable energy source system using photovoltaic panels according to the present disclosure;
Fig.3 illustrates a functional block diagram illustrating the iterative control method of the present disclosure in an exemplar embodiment;

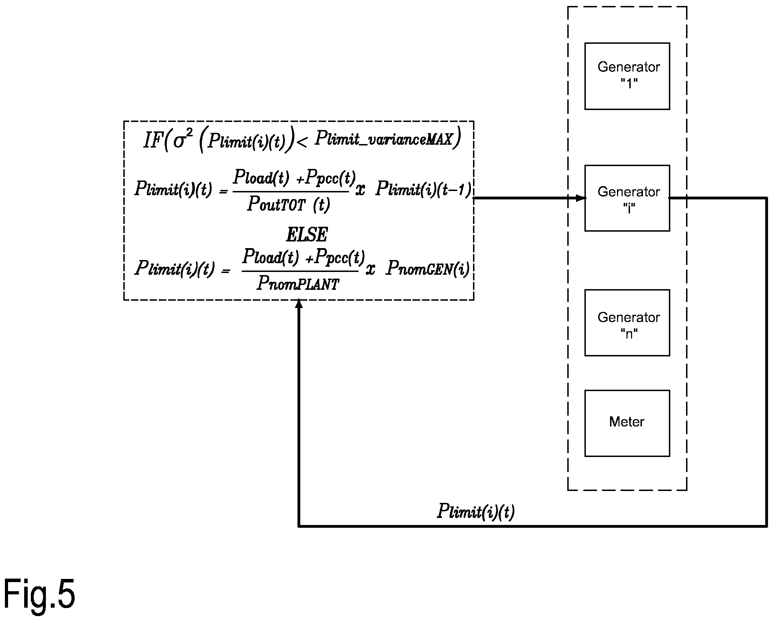

Figs.4 and 5 illustrate improved embodiments of the control method according to the present disclosure;
Fig.6 illustrates a flowchart summarizing a fallback strategy control according to the present disclosure;
Fig.7 illustrates a reactor pattern used to handle the data propagation among power generators and power meter; and
Fig.8 illustrates a schematic of the control step execution sequence.

DETAILED DESCRIPTION OF EMBODIMENTS

According to embodiments disclosed herein, to overcome or alleviate the drawbacks and disadvantages of the current art systems and methods for power export regulation, a novel design is provided, which is based on a distributed algorithm. All power generators of the system contribute to the overall control action autonomously and independently of one another. This practically means that each power generator is actually independent in using a feedback signal, for instance a feedback signal from a power meter providing information on the amount of active power actually exported to a utility grid. Each power generator also receives and uses other control inputs and in produces the required control action. The system and method disclosed herein also relies upon a connectivity network providing reliable exchange of control information between power generators and other control devices such as the power meter which measures the power exported by the system to the utility grid.

While in the present description specific reference will be made to export limitation, i.e. to a regulation task aimed at maintaining the power exported to a utility grid under a target value, the method and system disclosed herein can be used also to perform additional or different regulation functions relating to power exportation. For instance, the system and method disclosed herein can be used to regulate or control the active power exported to the utility grid.

Among the benefits of this approach the following are worth mentioning. Seamless integration is obtained, since once the power generators are enabled for plant control, no external control device is required. Moreover, the connectivity network ensures that relevant settings (e.g. power ratings of the several power generators forming the system) are automatically shared between power generators such that no additional configuration is needed. Moreover, a failsafe system is obtained. As will become clearer from the following detailed description of embodiments, if one or more power generators fail, the others can still perform control actions. Moreover, each power generator is autonomous in executing fallback actions, e.g. excluding itself from the control loop in case of failure. The single point of failure actually remains the power meter used to measure the power exported by the renewable energy source system to the utility grid. To reduce the risk of failure, a redundant configuration can be used, for instance providing a second meter.

In the following description reference will be made to a photovoltaic plant. It shall, however, be understood that at least some of the advantages disclosed herein can be obtained also when the method is implemented in a different renewable energy source system, including different kinds of renewable energy sources, such as concentrated solar power plants, wind farms, wave energy collection plants, fuel cell systems, and the like.

More generally, methods and systems disclosed herein may be beneficial in combination with low-inertia power generators, i.e. power generators which are capable of changing the output power with substantially no delay compared to the control dynamic.

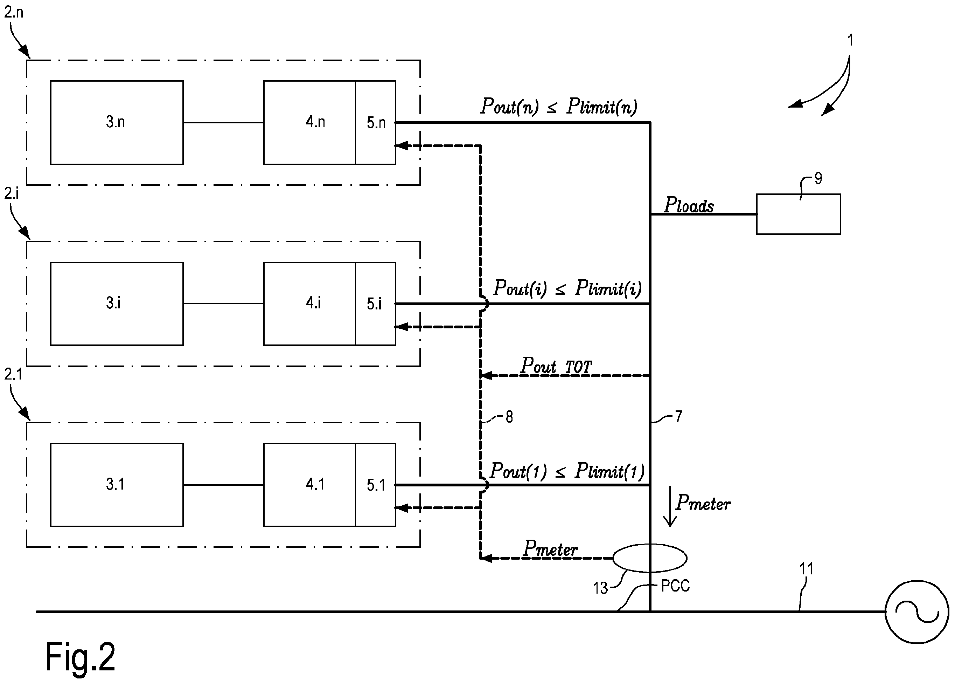

Turning now to the drawings, Fig.2 illustrates a schematic of an exemplary renewable energy source system 1 comprising a plurality of n photovoltaic generators 2.1, .... 2.i, ... 2.n. Each photovoltaic generator may include an array of photovoltaic panels 3.1, .... 3.i,.... 3.n and an inverter 4.1, .. 4.i, ...4.n. Each inverter 4.1, .. 4.i, ... 4.n is provided with a regulator 5.1, .. 5.i, ... 5.n. In embodiments disclosed herein the regulator is an embedded regulator. As used herein, the term embedded regulator is a regulator or controller which forms part of the inverter, differently from configurations of the background art, where a separate controller is added to the cluster of inverters (see Fig.1, external controller 103). The inverter collects DC electric power from the photovoltaic panels 3.1, .... 3.i,.... 3.n and converts it into AC electric power, which is then distributed on a local grid 7. Loads 9 can be electrically connected to the local grid 7. The local grid is connected to a utility grid at a point of common coupling PCC.

Each power generator 2.1, .. 2.i, .... 2.n generates output power $P_{out(1)}$, ... $P_{out(i)}$, .... $P_{out(n)}$. A portion $P_{loads}$ of the generated power is supplied to loads 9 coupled to the local grid 7, while the remaining power $P_{meter}$ is exported to the utility grid 11. A power meter 13, also referred to as PCC meter, measures the power $P_{meter}$ exported to the utility grid 11 and provides a feedback signal, again labeled $P_{meter}$, which contains information on the exported power, to each power generator. For instance the feedback signal can be the value of the active power exported to the utility grid 11. A connectivity network 8 can be provided for data transmission between the power meter 13 and the power generators 2.1, .... 2.i, .... 2.n. The connectivity network 8 also transmits data between power generators, for instance multicast data which each power generator publishes on the network for use by the other power generators, for purposes which will become clearer from the following description.

Each regulator 5.1, ... 5.i, .... 5.n of the generators 2.1, ... 2.i, ..... 2.n is adapted to provide control signals to regulate the power $P_{out(1)}$, .... $P_{out(i)}$, ... $P_{out(n)}$ delivered by each power generator 2.1, .. 2.i, .... 2.n. The feedback signal $P_{meter}$ is provided to each one of said regulators 5.1, ... 5.i, .... 5.n and each regulator generates a control signal for the relevant power generator 2.1, .... 2.i, ... 2,n. As will be described here on, the regulators can provide a feed-forward action, which is particularly beneficial, in that a faster control response is obtained. Moreover, feed-forward regulation does not require tuning of regulator parameters.

Each regulator 5.1, ... 5.i, .... 5.n can be implemented as a hardware device, as a control software or as a hybrid hardware and software device, and can be embedded in or form part of the inverter of the relevant power generator 2.1, .. 2.i, .... 2.n.

Based upon the control signal provided by the respective regulator 5.1, ... 5.i, .... 5.n, the output power $P_{out(1)}$, ...$P_{out(i)}$, ..... $P_{out(n)}$ of each generator 2.1, .... 2.i, .... 2.n is maintained under a respective limit threshold $P_{limit(1)}$, ... $P_{limit(i)}$, .... $P_{limit(n)}$. In the diagram of Fig.2 $P_{outTOT}$ indicates the total power generated by the inverters 2.1, .. 2.i, .... 2.n. The regulators 5.1, ... 5.i, .... 5.n are adapted to limit the power generated by each generator 2.1, .. 2.i, .... 2.n such that the total power output $P_{outTOT}$, minus the power $P_{loads}$ absorbed by the loads 9 is maintained under a target power exportation limit value $P_{PCC}$. Each regulator performs a control algorithm to provide a limitation signal for the relevant inverter based upon the total power output $P_{outTOT}$, and the active power $P_{meter}$ exported to the utility grid 11 at the point of common coupling PCC. The limitation signals of the inverters 2.1, .. 2.i, .... 2.n are aimed at maintaining the actual power $P_{meter}$ exported to the utility grid 11 under the target power exportation limit value $P_{PCC}$.

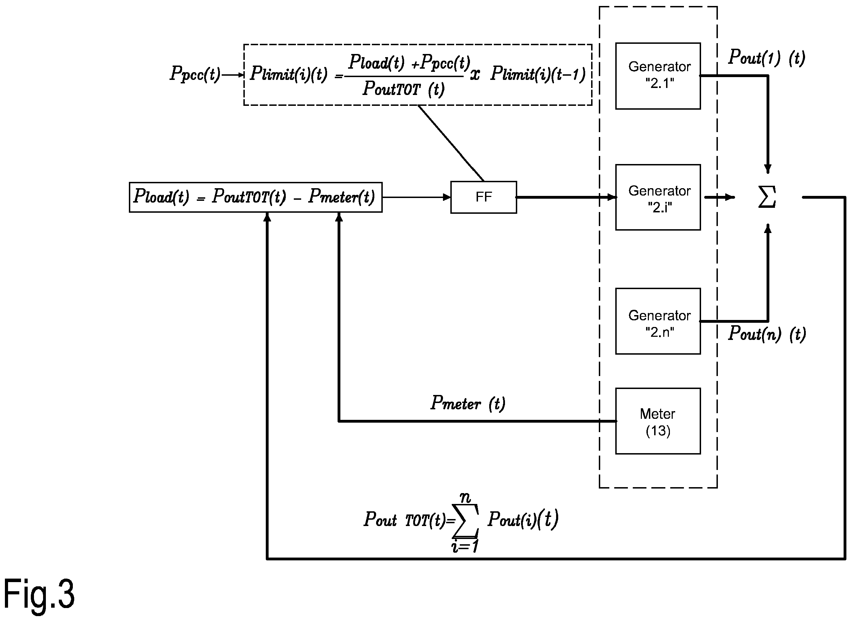

An embodiment of the regulators 5.1, ... 5.i, .... 5.n and relevant control loop is shown in the diagram of Fig.3. A single control loop for the i-th generator 2.i is shown in the diagram of Fig.3. It shall be understood that the same control loop is provided for each generator and the same algorithm is performed for each power generator. Each physical quantity described in relation to Fig.2 is shown in the diagram of Fig.3 followed by the indication (t), which indicates the time variable.

The control algorithm combines a feedback signal and a feed-forward action based on a load power estimation ($P_{load}(t)$). The total power $P_{outTOT}(t)$ generated by the generators 2.1, .. 2.i, .... 2.n. is used as a feed-forward input, together with the feedback signal ($P_{meter}$) from the PCC meter 13 for computing the power $P_{load}(t)$ absorbed by the loads 9. At each reiteration (t) of the control algorithm the total power generated by the generators 2.1, .. 2.i, .... 2.n is calculated by each regulator as follows:

$$P_{outTOT}(t) = \sum_{i=1}^{n} P_{out(i)}(t) \qquad (1)$$

The power absorbed by the loads 9 is calculated as follows:

$$P_{load}(t) = P_{outTOT}(t) - P_{meter}(t) \qquad (2)$$

Calculation of the total power $P_{outTOT}(t)$ requires each regulator 5.1, ... 5.i, .... 5.n to know the power generated by each generator 2.1, .. 2.i, .... 2.n. Each i-th power generator 2.i publishes the value of the power $P_{out(i)}(t)$ generated by it on the connectivity network 8 such that each power generator receives data on the power generated by all power generators and can calculate the total power $P_{outTOT}(t)$ according to formula (1). More details on data transmission and data sharing will be provided later on in this description.

The active power generated by each power generator can be measured by the relevant inverter and transmitted on the connectivity network by said inverter. To this end each inverter 4.1, ...4.i, ...4.n can be provided with a power meter and a transmission facility in data communication relationship with the connectivity network 8.

Based on the target active power, i.e. the maximum active power which can be exported to the utility grid 11, at each iteration at time instant (t) of the control loop the regulator 5.i of the i-th generator 2.i calculates a new power limitation signal $P_{limit(i)}(t)$ for the generator 5.i as follows:

$$P_{limit(i)}(t) = \frac{P_{load}(t) + P_{PCC}(t)}{P_{outTOT}(t)} \times P_{limit(i)}(t-1) \qquad (3)$$

wherein $P_{limit(i)}(t-1)$ is the old power limitation signal calculated at the previous iterative step (t-1).

The feedback signal $P_{meter}(t)$ is acquired by a control unit of each generator 2.1, .. 2.i, .... 2.n with a synchronous refresh period. The data propagation and handling can be performed according to the reactor pattern, as described in more detail later on.

At the same time, each control unit samples the power $P_{out(i)}(t)$ generated by the respective generator 2.i and transmits the sampled power value on the connectivity network 8, so that each control unit of each power generator can get all power samples and calculate the total generated power $P_{ouTOT}(t)$.

In some embodiments, the meter sampling is used as a synchronization event for regulation, i.e. each iterative step occurs whenever a new meter sample is acquired from the PCC meter 13.

The configuration of the regulators 5.1, ... 5.i, .... 5.n can be done by sharing between generators 2.1, .. 2.i, .... 2.n. the rated generator power, i.e. the maximum rated active power $P_{nomGEN(i)}$ of each power generator 2.i. Since the rated generator power is a static piece of information, which does not vary during operation, the rated active power can be shared by the power generator only once, when the power generator is introduced for the first time in the system.

By providing a regulator at each power generator 2.1, ...., 2.i, ... 2.n and a connectivity network 8 for transmitting the feedback signal $P_{meter}$ and the measured active power $P_{out(i)}$, of each power generator to each regulator of the system 1, an external controller is not required. Each regulator 5.i of each power generator 2.i receives sufficient information from the network 8 to calculate the limitation signal $P_{limit(i)}$ at each iterative step performed by the control algorithm.

Improved embodiments of the system and method described herein can be implemented in order to address particular issues which may arise during operation.

In some conditions, low and heterogeneous solar irradiation can lead to a situation where the output power which can be generated by some or all power generators 2.1, ...., 2.i, .... 2.n is lower than the $P_{limit}$ calculated by the respective regulator. Even if the export limitation goal is achieved, this situation can hide some pitfalls.

Indeed, if the load power $P_{load}(t)$ decreases, and consequently the exported power $P_{meter}(t)$ become greater

than the target $P_{PCC}$, the reduction of the $P_{limit}(t)$ at the subsequent iterative step following the $P_{meter}(t)$ increase will be computed using the previous active power limitation, i.e. $P_{limit}(t-1)$. Since the new limited power value $P_{limit}(t)$ will take effect only once it will be lower than the actual available power, the control action applied will have no impact or only partial impact on the system, especially in the first control iterations.

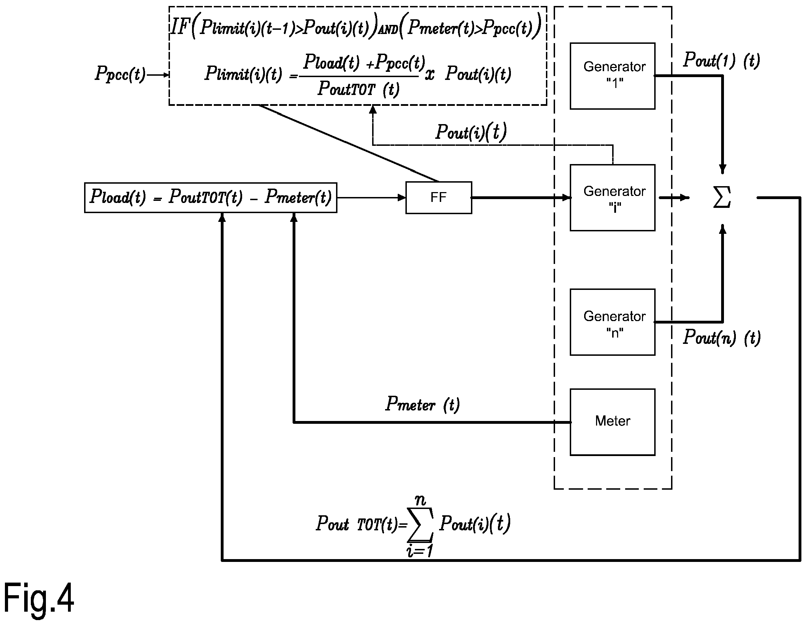

In order to deal with this case, according to an improved embodiment the control algorithm described above may be further developed so as to recognize the above described low irradiation or heterogeneous irradiation condition and will apply an alternative formula for the computation of the new $P_{umit}(t)$, if the available power $P_{out(i)}(t)$ from the i-th power generator (2.i) in question is lower than $P_{limit}(t-1)$. An embodiment of the improved control algorithm is shown in Fig.4.

If for a given power generator 2.i and at time instant (t) the following conditions are met:

$$P_{limit(i)}(t-1) > P_{out(i)}(t) \quad \text{and}$$

$$P_{meter}(t) > P_{PCC}(t) \tag{4}$$

the regulator will generate a limitation signal $P_{limit(i)}(t)$ according to the formula

$$P_{limit(i)}(t) = \frac{P_{load}(t) + P_{PCC}(t)}{P_{outTOT}(t)} \times P_{out(i)}(t) \tag{5}$$

instead of formula (3) above. I.e. the new limitation signal $P_{limit(i)}(t)$ will be calculated based upon the actual output power $P_{out(i)}(t)$, rather than upon the limitation signal $P_{limit(i)}(t-1)$ calculated at the previous iteration.

The application of the formula (5) in some circumstances may bring to a control effect that is not homogeneously balanced among the various power generators 2.1, ..., 2.i, ...., 2.n. The algorithm may be further improved in order to cope with unbalanced situations, i.e. in situations where the execution of iterative steps of the control loop causes the power generators to operate in unbalanced conditions.

Such unbalanced conditions may arise if low irradiation or heterogeneous (non-uniform) irradiation of the various photovoltaic panels of different power generators 2.i have caused the algorithm of one or some power generators to apply formula (5) rather than formula (3) in calculating the new power limit value $P_{limit(i)}(t)$.

However, unbalanced operating conditions may occur also in other situations. For instance, unbalancing conditions can occur when one or more power generators 2.1, ....2.i, ..... 2-n stop participating to the control. This may occur, for instance, if a power generator is temporarily disconnected from grid due to fault, for maintenance purposes, software upgrading, or for any other reason. If this situation occurs, the other power generators which remain connected and operative will increment the generated power in order to match the power request from the loads 9. If at a certain point in time the previously disconnected power generators restart, they will remain at zero power as long as the current load is sustained by the other power generators. This means that some power generators will operate at full load while others will actually stay inactive.

In order to prevent the unbalanced operating condition to occur, or to start a re-balancing routine, an improved control method may provide for sharing the control output (i.e. the $P_{limit(i)}(t)$ signals) of each power generator, for instance by providing that each power generator communicates, e.g. by multicasting on the connectivity network 8, the $P_{limit(i)}(t)$ value thereof to all other power generators. In this way the regulator 5.i of each i-th power generator 2.i can calculate the deviation of the limitation signals. The deviation can be calculated using a suitable statistic function. In some embodiments, the statistic function can be the variance $\sigma^2$ of the current $P_{lim-it(i)}(t)$ values. In other embodiments, the statistic function can be the standard deviation, or other suitable statistic functions.

If the deviation (e.g. the variance) is above a given maximum threshold $P_{limit-varianceMAX}$, the output of the feed-forward algorithm will not be calculated according to formula (3), but rather as

$$P_{limit(i)}(t) = \frac{P_{load}(t) + P_{PCC}(t)}{P_{nomPLANT}} \times P_{nomGEN(i)} \tag{6}$$

Thus, when the variance becomes higher than a pre-set threshold, meaning that a relevant number of power generators is providing an inhomogeneous control effect, balancing is restored by proportionally distributing the estimated load on each power generator, i.e. proportional to the nominal power $P_{nomGEN(i)}$ of each i-th power generator 2.i versus the nominal power $P_{nomPLANT}$ of the whole system 1.

The method and system disclosed herein can be further improved to provide fallback strategies implemented by the power generators 2.1, ... 2.i, ... 2.n independently of one another. Fallback strategies may be implemented in case of a fault occurring at or to a power generator. In the present disclosure two fault conditions will be considered as factors triggering a fallback strategy, namely:

> absence of feedback signal: this fault occurs when the regulator of a power generator does not receive a feedback signal $P_{meter}$ from the PCC meter 13;

> feedback out of target: this fault occurs when the feedback signal $P_{meter}$ is out of an expected target, for instance if the exported power measured by PCC meter 13 is higher than the maximum power exportable on the utility grid 11.

In order for a generic i-th power generator 2.i to enter a fallback state, a counter or timer can be provided, which runs when one or more fault conditions are pending. The counter is reset only when none of said fault conditions is present. If the counter goes over a deadline threshold $T_{deadline}$ the power generator enters the fallback state and the control will immediately apply specific recovery settings, e.g. limiting generated power to a minimum value that will ensure meeting PCC target. A counter value is equivalent to a time interval. Thus, a timer can be implemented, rather than a counter, for the same purpose. In the present context, a time interval can be understood as also including the count of a suitable counter.

When the power generator is in a fallback state, it will monitor for good conditions (absence of fault) persisting for a certain time $T_{restore}$ before exiting the fallback state and restoring the operating control.

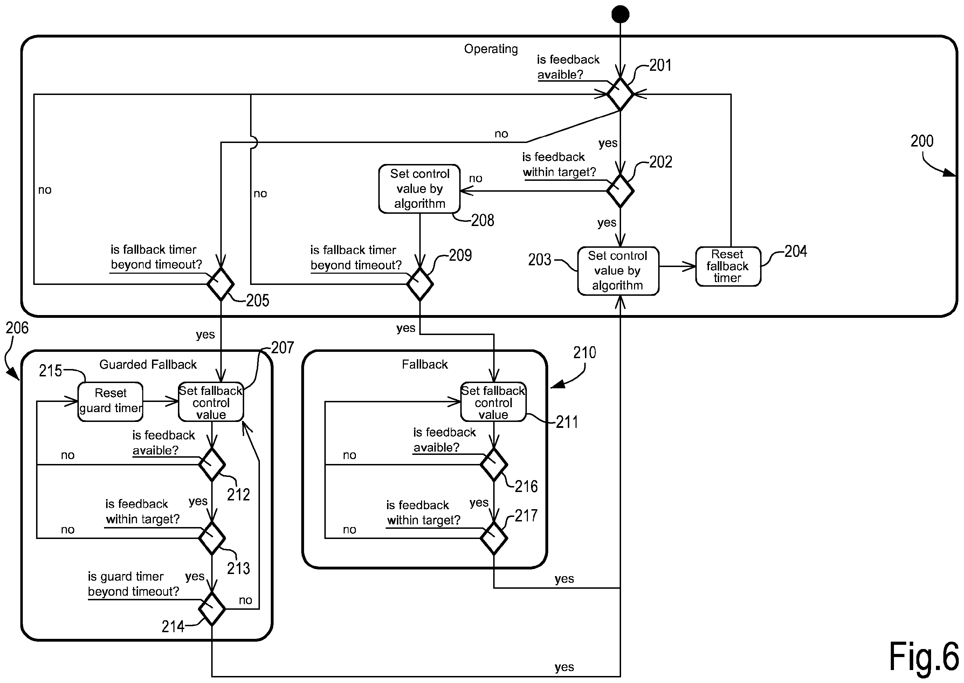

An exemplary embodiment of the above summarized fallback strategy is schematically summarized in the block diagram of Fig.6. In block 201 the regulator checks whether a feedback signal is available from the PCC meter 13. If the feedback signal is available, control shifts to block 202, where the regulator checks if the feedback signal is within a pre-set target. If this is the case, the control value $P_{limit(i)}(t)$ is calculated by the controller according to the above described algorithm (see block 203). Since no fault condition is present, a fallback counter or timer FC can be reset (block 204) and the process is re-iterated again starting from block 201.

If at block 201 no feedback signal is available, block 205 is executed: the regulator checks if the fallback counter or the fallback timer has exceeded a time limit (or a maximum number of re-iterations), above which the power generator shall enters a fallback status and perform a fallback strategy (block 206).

If the maximum threshold has been achieved, the power generator is placed in fallback status and the regulator sets a fallback control value (block 207). The power generator 2.i which has detected the fault situation (lack of feedback signal) will leave the fallback status represented by block 206 and revert in normal operating conditions (block 200) when a specific condition is met, as will be described later on. At block 207, for instance, the power generator can be isolated from the grid 7, or the power level thereof can be set at a minimum value.

If, conversely, at block 205 the regulator determines that the fallback timer has not been exceeded at block 205, the control moves again to block 201 and a new cycle is started.

Turning now to block 201, if a feedback signal is available the regulator checks if the feedback signal is within a target in block 202. If the feedback signal is not within the target (i.e. $P_{meter}(t) > P_{PCC}$) the regulator sets the control value $P_{limit(i)}(t)$ (see block 208) and moves to block 209 and checks if the fallback timer or counter is above the maximum threshold. If the maximum threshold has been exceeded, the power generator is placed in a fallback status.

In the exemplary embodiment of Fig. 6 the fallback status differs depending upon whether the power generator entered the fallback status from block 205 (lack of feedback signal) or from block 209 (feedback not within the target). The second fallback status is represented by block 210. When the regulator enters the fallback status 210, the fallback control value is set (see block 211). This fallback control value can be the same as the one set at block 207.

In the embodiment illustrated in Fig.6 the condition which shall be met by the power generator to leave the fallback status of block 206 (named "guarded fallback" in Fig.6) is different from the condition to leave the fallback status of block 210.

If the power generator has entered the guarded fallback status (block 206), it will return to the normal operating condition (block 200) if the absence of fault conditions (feedback signal available, checked at bloc 212, and feedback within target, checked at block 213) persists for a pre-set time interval (calculated by a guard timer, see block 214). If at least one of the fault conditions is present the guard timer is reset (bock 215) and the iterative cycle started again at block 207.

The guarded fallback routine described above and summarized in block 206 ensures that the power generator affected by the detected fault (feedback signal not available) will not re-enter the normal operation condition too soon.

The same routine could be used also when the feedback signal is not within the target, instead of using the routine described below and summarized in block 210. In the exemplary embodiment summarized in the flowchart of Fig.6, however, the power generator which entered the fallback status due to the feedback signal not being within the target will re-enter the normal operating condition as soon as no fault is detected, as summarized in the routine represented in block 210. In blocks 216 and 217 the presence or absence of the respective fault condition is checked.

The above procedure, which is performed by each power generator 2.1, ... 2.i, ...., 2.n, ensures that if a fault condition (fallback signal $P_{limit(i)}(t)$ not within the target and/or no feedback signal available) persists for a certain time period or for certain number of iterative cycles, the power generator is brought in the fallback status (block 206 or block 210).

The power generator which has been brought in fallback state will remain in said condition for a given period of time, or for a given number of iterative cycles of the control algorithm, even if the fault is removed, before switching in the normal operating condition again, in particular if the fault which triggered the fallback status is the absence of feedback signal. In the exemplary embodiment of Fig.6, if the fault is due to the feedback signal not being within the target, the power generator which entered the fallback status can revert to normal operation as soon as the fault condition is removed (block 210).

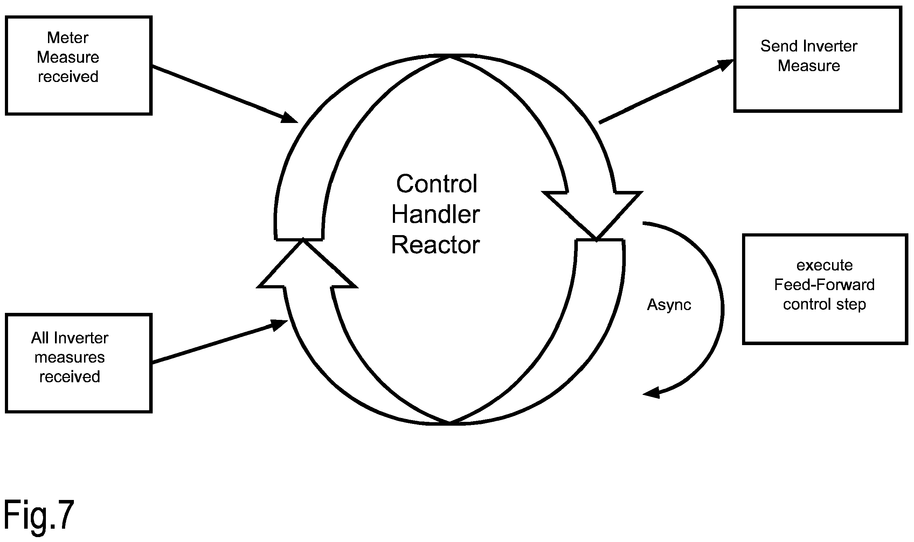

Data propagation for feed-forward control implementation can be performed according to the reactor pattern, summarized in the diagram of Fig.7. This involves an event-oriented behavior, wherein a control task running on each generator waits for a specific trigger before executing an action. In the current application the main triggering events are:

- a first event is the reception of the feedback sample. The feedback sample is the meter measure;

- a second event is the fallback timeout as described above in connection with Fig.6.

The feedback sample reception event is generated periodically at each control step so it is actually used as a synchronization signal by the controllers 5.1, ... 5.i, ... 5.n of the power generators 2.1, ... 2.i, .. 2.n. Moreover the feedback event allows for synchronous propagation of runtime data needed by the control algorithm.

The following table lists the control reaction (right-hand column) depending on respective trigger events (left-hand column):

| Event | Reaction |
|---|---|
| Reception of feedback *sample* ($P_{meter}(t)$) | The controller of each power generator shares the runtime data used for algorithm input data (e.g. generated power $P_{out(i)}(t)$) to the other controllers; Controller waits for receiving algorithm input data from the other controllers with predefined timeout (e.g. 100 ms for export limitation application). Controller executes control step in an asynchronous thread. |
| Fallback timeout | controller enters fallback state. controller applies fallback value in an asynchronous thread. |

When all input data of all the power generators 2.1, ..., 2.i, ... 2.n have been received or after a predefined timeout (e.g. 100 ms) has expired, the control step is executed in an asynchronous thread.

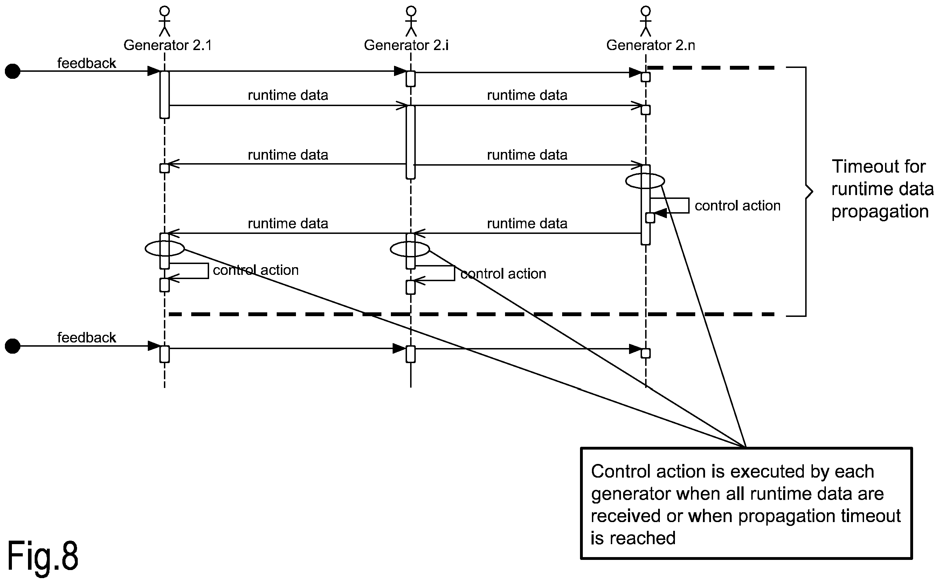

Given the asynchronous nature of the control step execution, the control handler is guaranteed to be able to initiate a new control step as soon as all inverter measures have been received or the timeout is expired, whatever comes first: meanwhile the control algorithm is executed in a parallel thread. This is pictorially represented in the diagram of Fig. 8. In some embodiments, the minimum control step time has been estimated to be 135 ms.

While in the above description reference was made to a feed-forward control, in other embodiments a different regulator can be used, for instance a PI (Proportional-Integral) or a PID (Proportional-Integral-Derivative) regulation.

In case a PID or PI regulation is used, the algorithm will manage the following signals:

- Feedback signal: Active power ($P_{meter}$) at the point of common coupling PCC measured by the PCC meter 13;
- Target: Target active power at PCC ($P_{PCC}$);
- Output: Active power limitation signal $P_{limit}(t)$ to be applied to the respective generator 2.1, ... 2.i, .. 2.n.

The control method will be implemented as follows. A sample ($P_{meter}(t)$) of the active power exported to the utility grid 11 is acquired by each control unit of each power generator every with synchronous refresh period ($T_{meter}$). The meter sampling is used as synchronization event for regulation; i.e. processing of the sample $P_{meter}(t)$ and the application of the limitation signal $P_{limit(i)}(t)$ occur each time a new meter sample $P_{meter}(t)$ is acquired.

The regulators of each power generator can be configured by sharing among all power generators the rated generator power, i.e. the maximum rated active power $P_{nomGEN(i)}$ of each power generator of system 1. Moreover the parameters of the PI or PID regulator can be tuned during algorithm characterization or plant commissioning.

When the PI or PID regulator is used to keep the actual active power flow (Pmeter) flowing through the PCC under a predefined limit, a fast and aggressive control action is particularly beneficial, when the power error at PCC is

negative, i.e. when $P_{PCC} \leq P_{meter}$. A slower and smooth regulation can be used, conversely, when the power error at PCC is positive, i.e. when $P_{PCC} \geq P_{meter}$). This opens possibility of using a PID regulator with asymmetrical coefficients leading to a more efficient control action. However, on the other hand, a more complex tuning procedure is necessary, which the above described feed-forward regulator does not need.

While the invention has been described in terms of various specific embodiments, it will be apparent to those of ordinary skill in the art that many modifications, changes, and omissions are possible without departing form the spirit and scope of the claims. In addition, unless specified otherwise herein, the order or sequence of any process or method steps may be varied or re-sequenced according to alternative embodiments.

**Claims**

1. A method for regulating power export from an energy generation system (1) to a utility grid (11), wherein the energy generation system includes a plurality of power generators (2.1, ... 2.i, ...., 2.n); the method comprising the following steps:

   monitoring an actual power ($P_{meter}$) exported from the system (1) to the utility grid (11);
   providing to each power generator (2.1, ... 2.i, ...., 2.n) a feedback signal ($P_{meter}$), containing information on the power exported by the system (1) to the utility grid (11);
   at each power generator (2.1, ... 2.i, ...., 2.n), by means of a respective regulator (5.1, .... 5.i, ...., 5.n), providing a regulation signal ($P_{limit(i)}(t)$) for the relevant power generator.

2. The method of claim 1, wherein the regulation signal limits the power supplied by the power generator, in response to said feedback signal, such that the power exported by the system (1) to the utility grid (11) is maintained at or below a target power exportation limit value ($P_{PCC}$).

3. The method of claim 1 or 2 wherein each regulator (5.1, .... 5.i, ...., 5.n) is a feed-forward regulator.

4. The method of claim 1, 2 or 3, wherein the regulator is embedded in an inverter of the relevant power generator.

5. The method of any one of the preceding claims, further comprising the following step:
   providing to each power generator (2.1, ... 2.i, ...., 2.n) information on the total power ($P_{outTOT}$) cumulatively generated by all power generators (2.1, ... 2.i, ...., 2.n);
   and wherein each regulator (5.1, .... 5.i, ...., 5.n) provides a feed-forward control signal ($P_{limir}(t)$) to the respective power generator (2.1, ... 2.i, ...., 2.n), based upon the total power ($P_{outTOT}$) generated by all power generators and upon a target power exportation value, in particular an exportation limit value ($P_{PCC}$).

6. The method of claim 5, wherein the step of providing information on the total power ($P_{outTOT}$) cumulatively generated by all power generators (2.1, ... 2.i, ...., 2.n) comprises the steps of:

   publishing runtime measures of each power generator (2.1, ... 2.i, ...., 2.n) on a connectivity network (8), to which each power generator is connected;
   at each power generator, collecting runtime measures published by all power generators and calculating aggregated data related to the overall system.

7. The method of any one of the preceding claims, wherein the step of providing the regulation signal comprises the following steps:

   (a) calculating the total power ($P_{outTOT}$) generated by the power generators (2.1, ... 2.i, ...., 2.n);
   (b) calculating a power ($P_{load}(t)$) absorbed by loads (9) electrically coupled to the power generators (2.1, ... 2.i, ...., 2.n);
   (c) calculating a new value of the regulation signal ($P_{limit(i)}(t)$) as a function of: a previous value of the regulation signal ($P_{limit(i)}(t-1)$), the target power exportation value ($P_{PCC}$), the power ($P_{load}(t)$) absorbed by the loads (9) and the total power ($P_{outTOT}$) generated by the power generators;
   (d) iteratively repeating steps (a)-(c), whereby each new value of the regulation signal becomes the previous value of the regulation signal at the next iteration.

8. The method of claim 7, wherein the power ($P_{load}(t)$) absorbed the loads (9) is computed as the difference between the total power ($P_{outTOT}(t)$) generated by the power generators (2.1, ... 2.i, ...., 2.n) and the power exported from the system (1) to the utility grid (11).

9. The method of claim 7 or 8, wherein:

if the available power ($P_{out(i)}(t)$) from a power generator is lower than a limited power value ($P_{limit(i)}(t-1)$) determined by the regulation signal; and
the power ($P_{meter}(t)$) exported to the utility grid (11) is higher than the target power exportation limit value ($P_{PCC}$),

the new value of the regulation signal of said power generator is calculated as a function of: the actual power output ($P_{out(i)}(t)$) of said power generator, the target power exportation limit value ($P_{PCC}$), the power ($P_{load}(t)$) absorbed by the loads (9), and the total power ($P_{outTOT}$) generated by the power generators.

10. The method of any one of the preceding claims, comprising the following steps:

calculating a statistic variable ($\sigma^2$) representative of a distribution of the values of the regulation signals of the power generators;
if the statistic variable is above a threshold value, performing a step of re-balancing the power generated by the power generators.

11. The method of claim 10, wherein the statistic variable is selected from the group comprising: variance; standard deviation.

12. The method of any one of the preceding claims, further comprising the steps of:

checking if at least one fault condition occurs at one of said power generators (2.1, ... 2.i, ...., 2.n);
if said fault condition occurs, switching the power generator at which the fault condition occurs in a fallback operating condition.

13. The method of claim 12, wherein said at least one fault condition is selected among the group consisting of: the feedback signal ($P_{meter}$) is absent; the feedback signal ($P_{meter}$) is out of a preset target ($P_{PCC}$).

14. The method of claim 12 or 13, wherein the step of switching in the fallback operating condition is performed if the at least one fault condition persists for a predetermined period of time.

15. The method of any one of the preceding claims, wherein each generator comprises an inverter (4.1, .... 4.i, .... 4.n).

16. The method of any one of the preceding claims, wherein the system (1) includes one or more of the following:

a solar energy source comprising at least one photovoltaic panel;
a wind energy source comprising at least one wind turbine;
a hydro energy source comprising at least one water source;
a fuel cell;
a genset;
a storage battery.

17. An energy source system (1) comprising:

a plurality of power generators (2.1, ... 2.i, ...., 2.n) electrically coupled at a point of common coupling to a utility grid (11); wherein each power generator comprises a regulator (5.1, .... 5.i, ...., 5.n);
a power meter (13) adapted to measure power exported by the plurality of power generators to the utility grid (11);
a connectivity network connecting the power generators and the power meter to one another in data exchange relationship;

wherein each regulator is adapted perform a method according to any one of the preceding claims.

PV Generator 1    PV Generator 2    External controller    103

101    101

meter feedback to controller

fallback switches command

111    111    PCC Meter    PCC

102    $P_{loads}$    109

$P_{meter}$

LOADS    107

105

(background art)

Fig.1

Fig.2

$Pout(1)\,(t)$

$Pout(n)\,(t)$

$\sum$

Generator "2.1"

Generator "2.i"

Generator "2.n"

Meter (13)

FF

$Plimit(i)(t) = \dfrac{Pload(t) + Ppcc(t)}{PoutTOT\,(t)} x \; Plimit(i)(t-1)$

$Ppcc(t) \longrightarrow$

$Pload(t) = PoutTOT(t) - Pmeter(t)$

$Pmeter\,(t)$

$Pout\,TOT(t) = \displaystyle\sum_{i=1}^{n} Pout(i)(t)$

Fig.3

$$IF\left(P_{limit(i)(t-1)}>P_{out(i)(t)}\right)_{AND}\left(P_{meter(t)}>P_{pcc(t)}\right)$$

$$P_{pcc}(t) \rightarrow \qquad P_{limit(i)}(t) = \frac{P_{load}(t) + P_{pcc}(t)}{P_{outTOT}\ (t)} x\ \ P_{out(i)}(t)$$

$$P_{out(i)}(t)$$

Generator "1" — $P_{out(1)}\ (t)$

$$P_{load}(t) = P_{outTOT}(t) - P_{meter}(t)$$

FF

Generator "i" — $\sum$

Generator "n" — $P_{out(n)}\ (t)$

$P_{meter}\ (t)$ — Meter

$$P_{out}\ TOT(t) = \sum_{i=1}^{n} P_{out(i)}(t)$$

Fig.4

EP 3 736 937 A1

EP 3 736 937 A1

$$IF\left(\sigma^2\left(P_{limit(i)}(t)\right) < P_{limit\_varianceMAX}\right)$$

$$P_{limit(i)}(t) = \frac{P_{load}(t) + P_{pcc}(t)}{P_{outTOT}(t)} x \ P_{limit(i)}(t-1)$$

ELSE

$$P_{limit(i)}(t) = \frac{P_{load}(t) + P_{pcc}(t)}{P_{nomPLANT}} x \ P_{nomGEN(i)}$$

Generator "1"

Generator "i"

Generator "n"

Meter

$P_{limit(i)}(t)$

Fig.5

EP 3 736 937 A1

Operating

is feedback
avaible? ◇—201

no

yes

is feedback
within target? ◇—202

Set control
value by
algorithm ⌐208

no

yes

203— Set control
value by
algorithm

Reset
fallback
timer ⌐204

200

no

no

is fallback timer
beyond timeout? ◇—205

is fallback timer
beyond timeout? ◇—209

yes

yes

206

Guarded Fallback

215— Reset
guard timer

Set fallback
control
value ⌐207

is feedback
avaible? ◇

no

yes
212

is feedback
within target? ◇

no

yes
213

is guard timer
beyond timeout? ◇

yes

no
214—

Fallback

Set fallback
control
value

210

211

is feedback
avaible? ◇

no

yes
216

is feedback
within target? ◇

no

yes
217

yes

yes

Fig.6

Fig.7

Fig.8

Generator 2.1   Generator 2.i   Generator 2.n

feedback

runtime data         runtime data

runtime data         runtime data

control action

runtime data         runtime data

control action       control action

Timeout for runtime data propagation

feedback

Control action is executed by each generator when all runtime data are received or when propagation timeout is reached

Europäisches
Patentamt

European
Patent Office

Office européen
des brevets

# EUROPEAN SEARCH REPORT

**Application Number**

EP 19 17 3833

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2014/175887 A1 (SHAO MIAOLEI [US] ET AL) 26 June 2014 (2014-06-26) <br> * paragraph [0032] - paragraph [0038] * <br> * paragraph [0051] - paragraph [0054] * <br> * abstract; claim 1; figures 2,4 * <br> ----- | 1-17 | INV. <br> H02J3/38 <br> H02J3/46 |
| X | EP 2 790 312 A2 (GEN ELECTRIC [US]) 15 October 2014 (2014-10-15) <br> * abstract; claims; figures 1,2 * <br> * paragraph [0012] - paragraph [0017] * <br> * paragraph [0019] - paragraph [0023] * <br> ----- | 1-17 | |
| A | EP 2 704 309 A2 (GEN ELECTRIC [US]) 5 March 2014 (2014-03-05) <br> * the whole document * <br> ----- | 1-17 | |
| A | US 2017/358929 A1 (KOEPPE JIM [US] ET AL) 14 December 2017 (2017-12-14) <br> * abstract; claim 1; figure 1 * <br> ----- | 1-17 | |
| | | | **TECHNICAL FIELDS SEARCHED (IPC)** <br><br> H02J |

The present search report has been drawn up for all claims

| Place of search | Date of completion of the search | Examiner |
|---|---|---|
| Munich | 7 June 2019 | Rother, Stefan |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

**EP 3 736 937 A1**

## ANNEX TO THE EUROPEAN SEARCH REPORT
## ON EUROPEAN PATENT APPLICATION NO.

EP 19 17 3833

This annex lists the patent family members relating to the patent documents cited in the above-mentioned European search report.
The members are as contained in the European Patent Office EDP file on
The European Patent Office is in no way liable for these particulars which are merely given for the purpose of information.

07-06-2019

| Patent document cited in search report | Publication date | Patent family member(s) | Publication date |
|---|---|---|---|
| US 2014175887 A1 | 26-06-2014 | US 2014175887 A1<br>WO 2014099233 A1 | 26-06-2014<br>26-06-2014 |
| EP 2790312 A2 | 15-10-2014 | CA 2848107 A1<br>CN 104104221 A<br>EP 2790312 A2<br>US 2014307494 A1 | 11-10-2014<br>15-10-2014<br>15-10-2014<br>16-10-2014 |
| EP 2704309 A2 | 05-03-2014 | BR 102013021844 A2<br>CA 2824204 A1<br>CN 103683318 A<br>EP 2704309 A2<br>US 2014062424 A1 | 27-09-2016<br>28-02-2014<br>26-03-2014<br>05-03-2014<br>06-03-2014 |
| US 2017358929 A1 | 14-12-2017 | AU 2017277641 A1<br>CA 3027939 A1<br>CN 109478795 A<br>EP 3469685 A1<br>KR 20190018155 A<br>US 2017358929 A1<br>WO 2017214348 A1 | 17-01-2019<br>14-12-2017<br>15-03-2019<br>17-04-2019<br>21-02-2019<br>14-12-2017<br>14-12-2017 |

EPO FORM P0459

For more details about this annex : see Official Journal of the European Patent Office, No. 12/82

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 10139847 B